# EUROPEAN PATENT SPECIFICATION

(11) **EP 1 359 993 B1**
(45) Date of publication and mention of the grant of the patent: **05.07.2006**
(21) Application number: 02703231.7
(22) Date of filing: 23.01.2002
(51) Int. Cl.: B01D 63/02, B01D 63/04

(54) **HOLLOW FIBER MEMBRANE CASSETTE**
HOHLFASERMEMBRANKASSETTE
CASSETTE A MEMBRANE EN FIBRES CREUSES

(30) Priority: 23.01.2001 US 263192 P
(43) Date of publication of application: 12.11.2003
(73) Proprietor: Amersham Biosciences Membrane Separations Corp., Westborough, MA 01581 (US)
(72) Inventor: HERCZEG, Attila, Southborough, MA 01772 (US)
(74) Representative: Rollins, Anthony John
(86) International application number: PCT/US2002/002112
(87) International publication number: WO 2002/058827

(56) References cited:
- WO-A1-94/19094
- US-A- 3 342 729
- US-A- 3 891 547
- US-A- 5 282 964
- US-A- 5 620 605
- US-A- 5 922 201
- US-A- 6 103 118
- US-B1- 6 325 928
- US-B1- 6 383 385

## Description

### FIELD OF THE INVENTION

This invention pertains to cassettes comprising porous hollow fiber membranes.

### BACKGROUND OF THE INVENTION

Cassettes or other plate and frame formats incorporating a plurality of flat sheet membranes arranged between external stainless steel flat end plates and stainless steel manifolds (or between manifolds supported by stainless steel flat end plates) are utilized for a variety of filtration applications, particularly tangential flow filtration applications (also referred to as cross flow applications). In tangential flow filtration applications (TFF), the fluid to be filtered is passed through the inlet of the manifold and into the cassette and tangentially to the first (or upstream) surface of the membranes, such that a portion of the fluid passes through each of the membranes from the first surface to the second (or downstream) surface, through the cassette and one outlet of the manifold, and another portion passes tangentially to the first surface, through the cassette and another outlet of the manifold without passing through the membranes. The fluid passing into the inlet of the manifold and into the cassette is commonly referred to as the feed (the feed contains various sized molecules and possibly debris), the fluid passing from the first surface to the second surface is commonly referred to as the permeate or the filtrate (the permeate/filtrate contains the smaller molecules that will pass through the pores of the membrane), and the fluid passing parallel to the first surface of the membrane without passing to the second surface is commonly referred to as the retentate (the retentate contains the larger molecules that do not pass through the pores of the membrane).

However, conventional flat sheet membrane cassettes (including open channel cassettes and screen channel cassettes) have suffered from a number of deficiencies, particularly due to non-uniform flow distribution and/or fouling of at least one surface of the membranes. Fouling typically refers to the accumulation of material on the inside surface of the membrane. This accumulated material can block the pores of the membrane. Once the surface is fouled, filtration efficiency is decreased, and the membranes and cassettes need to be cleaned or replaced. Additionally, some membranes and cassettes are difficult to clean.

WO-A-9419094 discloses a hollow fiber cassette comprising a filter housing, the filter housing including a plurality of filter housing permeate ports, a filter disposed in the housing, the filter comprising a plurality of hollow fiber membranes, an internal manifold comprising a first cassette header and a second cassette header, the first cassette header further comprising one cassette feed port, and the second cassette header further comprising one cassette retentate port.

The present invention provides for ameliorating at least some of the disadvantages of the prior art. These and other advantages of the present invention will be apparent from the description as set forth below.

### BRIEF SUMMARY OF THE INVENTION

In accordance with an embodiment of the invention, a hollow fiber cassette is provided comprising an exterior casing comprising an internal manifold, and a filter comprising a plurality of hollow fiber membranes, the filter communicating with internal manifold, wherein the cassette is arranged to allow feed flow and permeate flow, and, in a preferred embodiment, retentate flow.

A hollow fiber cassette according to an embodiment of the invention comprises a filter housing, the filter housing including a plurality of filter housing permeate ports, a filter disposed in the housing, the filter comprising a plurality of hollow fiber membranes, an internal manifold comprising a first cassette header and a second cassette header, the first and second cassette headers each comprising a plurality of cassette permeate ports, wherein the filter housing permeate ports are in fluid communication with the cassette permeate ports, the first cassette header further comprising at least one cassette feed port, and the second cassette header further comprising at least one cassette retentate port.

In accordance with an embodiment of the invention, a hollow fiber cassette is provided comprising a filter housing, the filter housing including a plurality of filter housing permeate ports, a filter disposed in the housing, the filter comprising a plurality of hollow fiber membranes, an internal manifold comprising a first cassette header and a second cassette header, the first and second cassette headers each comprising a plurality of cassette permeate ports and a cassette permeate connector, wherein the filter housing permeate ports are in fluid communication with the cassette permeate ports, and the cassette permeate ports are in fluid communication with the cassette permeate connector, the first cassette header further comprising a plurality of cassette feed ports and a cassette feed connector, wherein the cassette feed ports are in fluid communication with the cassette feed connector, and the second cassette header further comprising a plurality of cassette retentate ports and a cassette retentate connector, wherein the cassette retentate ports are in fluid communication with the cassette retentate connector. In a preferred embodiment, each of the connectors is a sanitary fitting.

Embodiments of the hollow fiber membrane cassette can be interchanged with flat sheet based cassettes or packets without the need to replace existing conventional flat end plate and external manifold or dual flat sheet external manifold systems or arrangements. Moreover, in some embodiments of the invention, the hollow fiber membrane cassette can be utilized without an external manifold.

The hollow fiber membrane cassettes can be utilized individually, stacked together and/or arranged on opposing sides of a central flat sheet manifold.

### BRIEF DESCRIPTION OF THE DRAWINGS

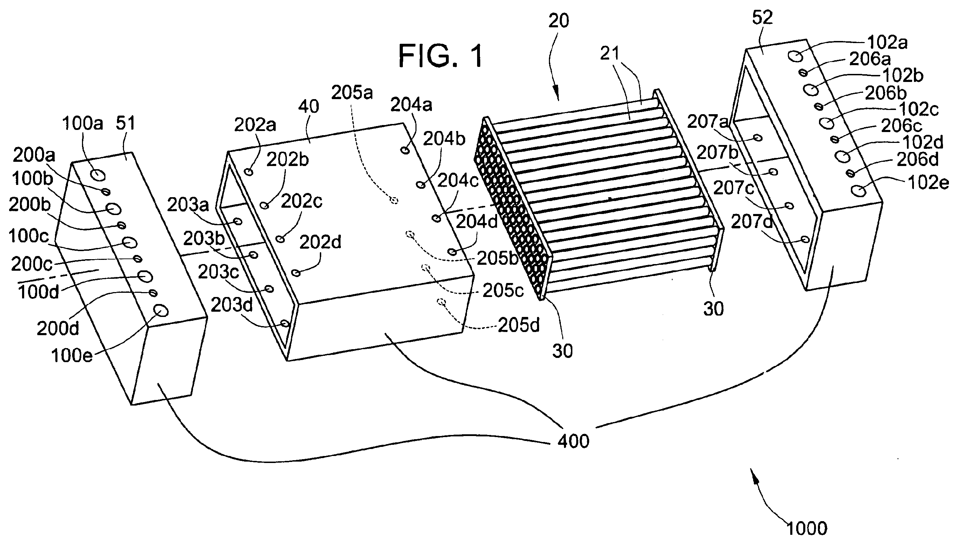

Figure 1 shows an exploded view of a hollow fiber cassette according to an embodiment of the invention, comprising a casing comprising an internal manifold comprising first and second cassette headers, the first cassette header including a plurality of feed ports, the second cassette header including a plurality of retentate ports, the first and second cassette headers also including a plurality of permeate ports, a filter housing including a plurality of permeate ports; and a filter comprising a plurality of hollow fiber membranes.

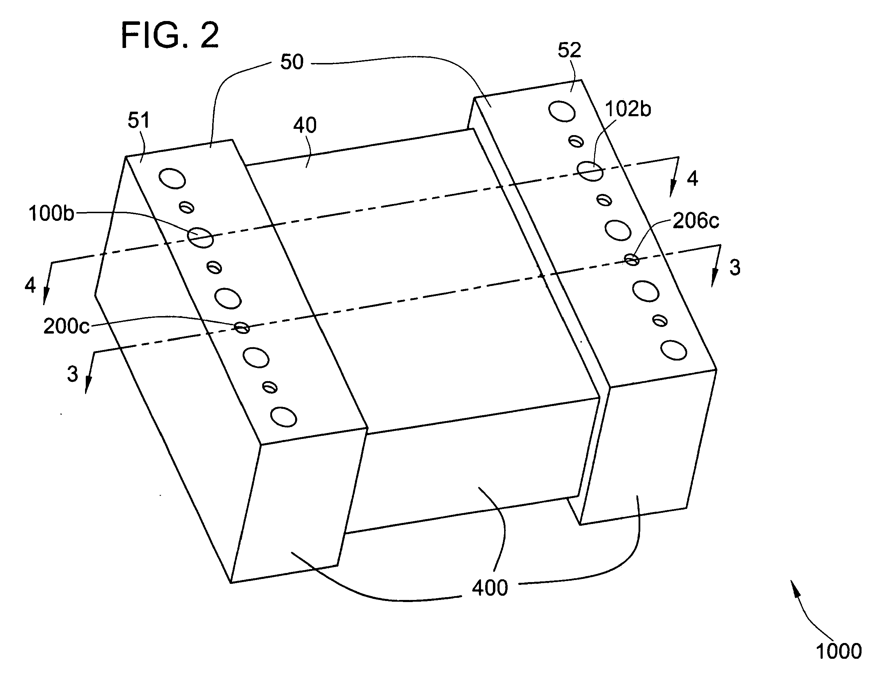

Figure 2 shows an assembled top view of the cassette shown in Figure 1.

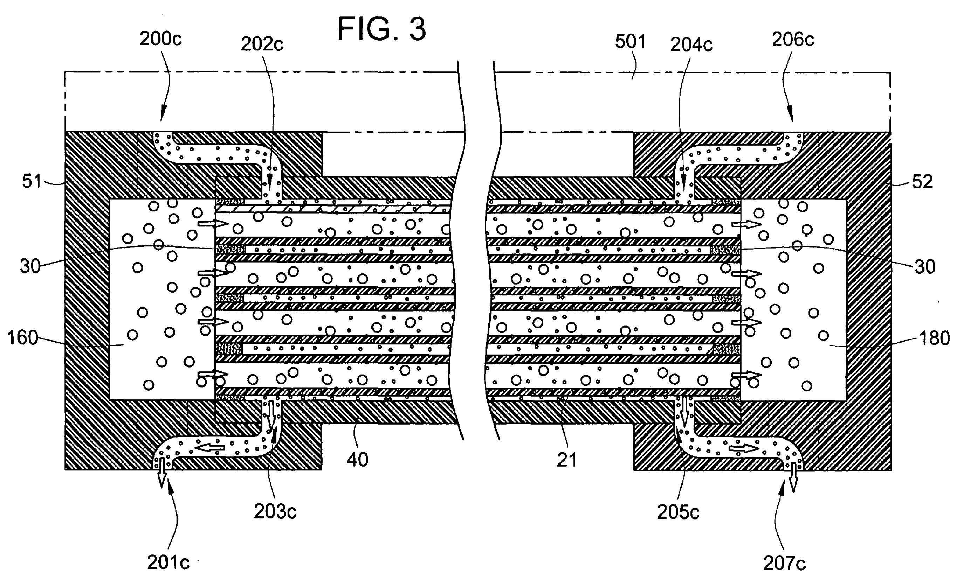

Figure 3 illustrates a cross-sectional view along line 3-3 in Figure 2, showing the permeate flow path from the inside surfaces to the outside surfaces of the hollow fiber membranes and through the permeate ports in the filter housing and the first and second cassette headers, wherein a flat end plate (shown in dotted lines) is placed against one side of the cassette during use.

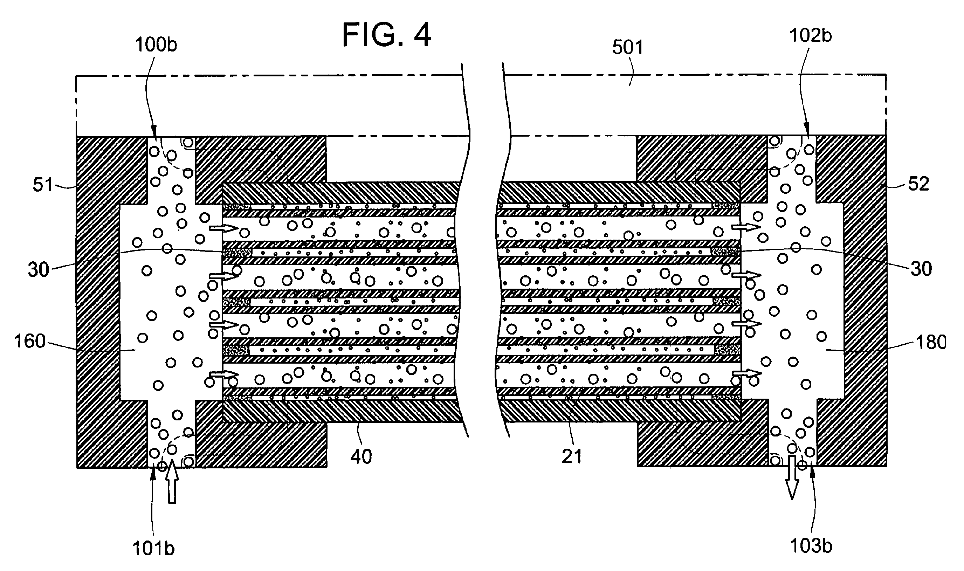

Figure 4 illustrates a cross-sectional view along line 4-4 in Figure 2, showing the retentate flow path from the first cassette header along the bores of the membranes and through the retentate ports of the second cassette header, wherein a flat end plate (shown in dotted lines) is placed against one side of the cassette during use.

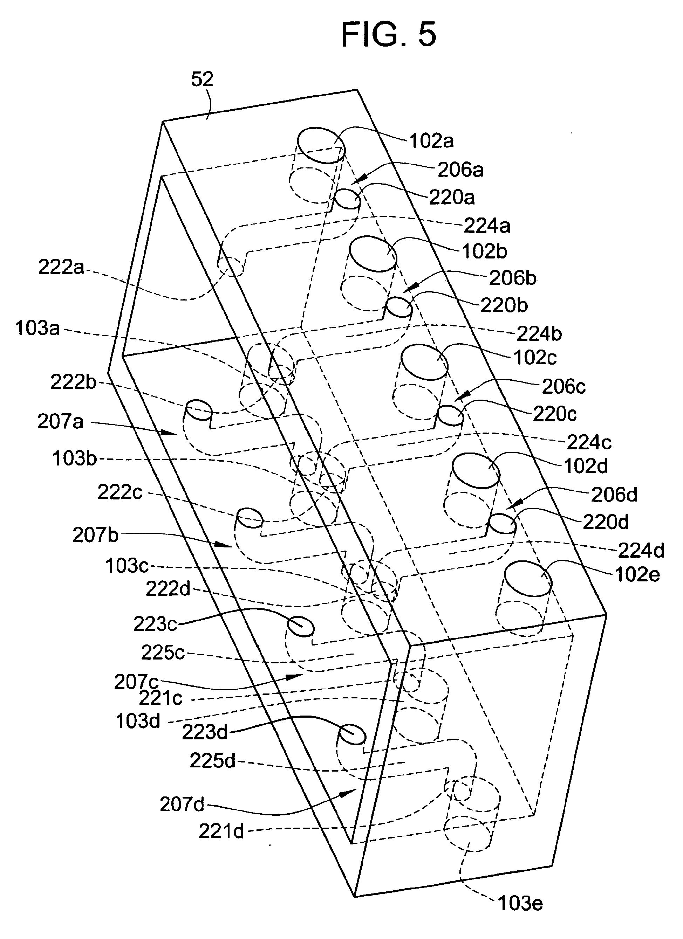

Figure 5 shows a detailed isometric view of one of the cassette headers of the internal manifold shown in Figures 1 and 2, showing a plurality of feed or retentate ports, and a plurality of permeate ports, each permeate port comprising an inside permeate port and an outside permeate port, each set of inside and outside permeate ports being offset, and communicating via an intermediate permeate conduit.

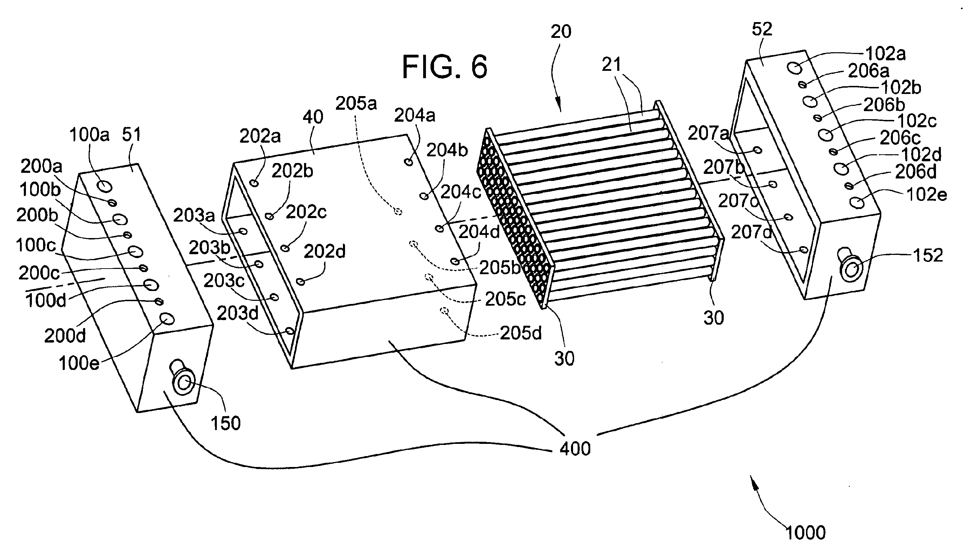

Figure 6 shows an exploded view of a hollow fiber cassette according to an embodiment of the invention, comprising a casing comprising an internal manifold comprising first and second cassette headers, the first cassette header including a plurality of feed ports and a feed sanitary fitting, the second cassette header including a plurality of retentate ports and a retentate sanitary fitting, the first and second cassette headers also including a plurality of permeate ports (permeate sanitary fitting, and permeate conduits for each cassette header not shown), a filter housing including a plurality of permeate ports; and a filter comprising a plurality of hollow fiber membranes.

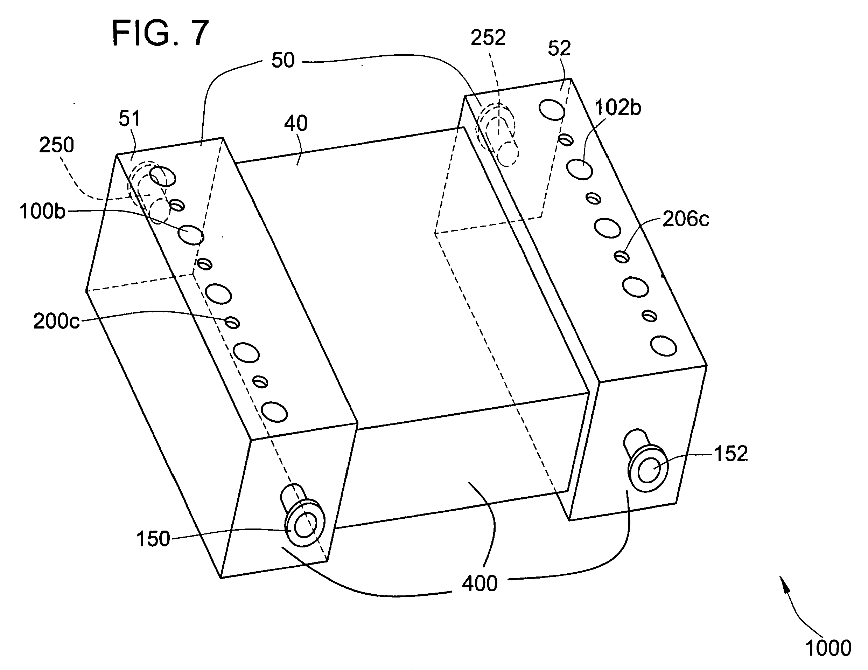

Figure 7 shows an assembled view of the cassette shown in Figure 6 (also showing the permeate sanitary fitting for each cassette header).

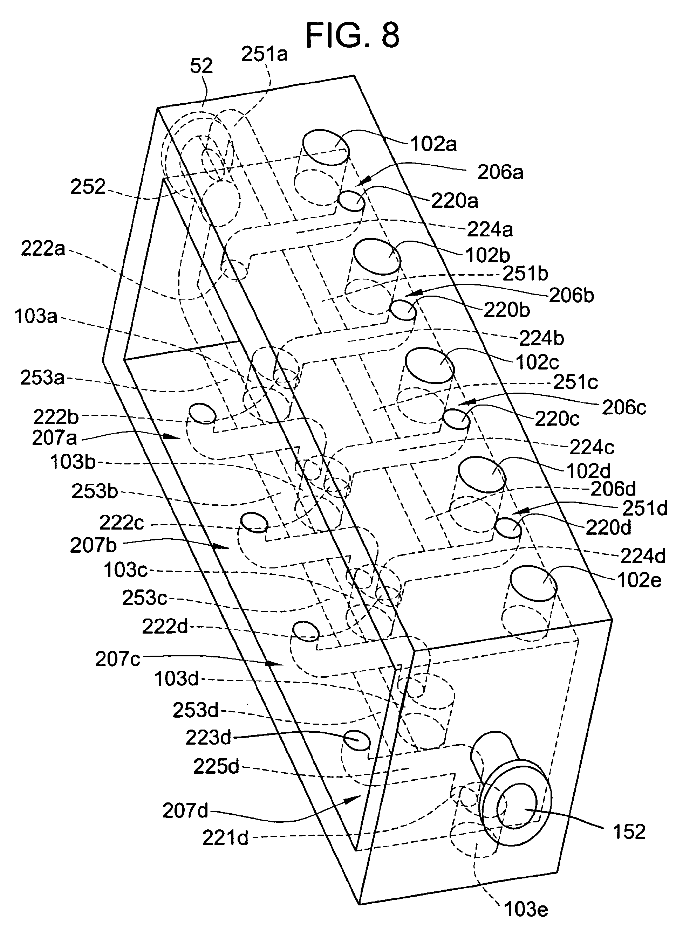

Figure 8 shows a detailed isometric view of one of the cassette headers of the internal manifold shown in Figures 6 and 7, showing a plurality of feed or retentate ports communicating with a feed or retentate sanitary fitting; a permeate sanitary fitting, a plurality of permeate ports, each permeate port comprising an inside permeate port and an outside permeate port, each set of inside and outside permeate ports being offset, and communicating via an permeate intermediate conduit, and also showing additional permeate conduits, in fluid communication with the permeate intermediate conduits and the permeate sanitary fitting.

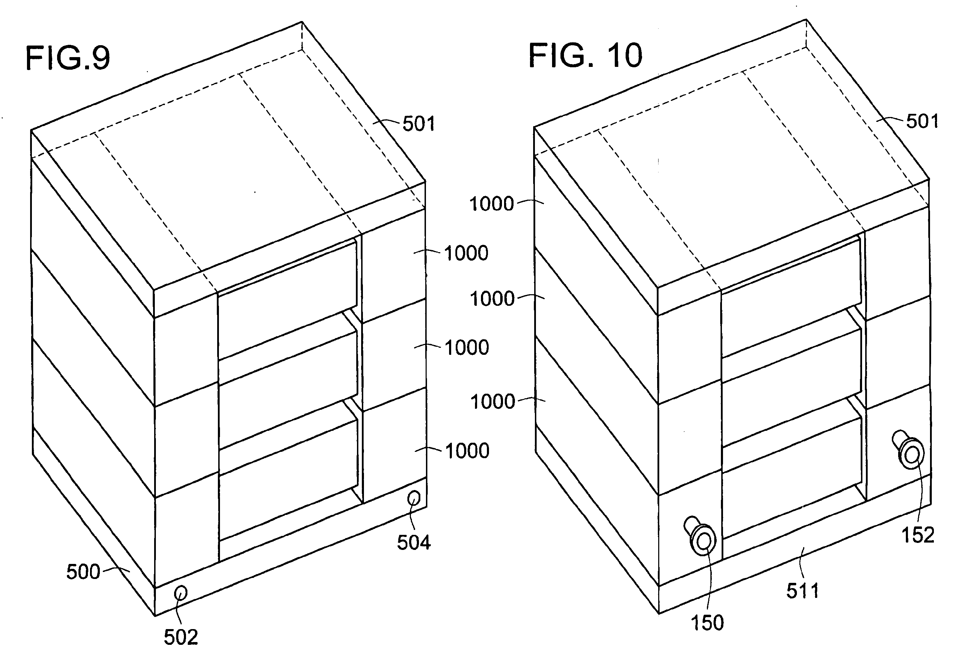

Figure 9 shows a plurality of hollow fiber cassettes as shown in Figure 2 stacked together as a cassette system for use with a conventional external manifold and flat end plate as used with flat membrane cassettes.

Figure 10 shows a plurality of hollow fiber cassettes as shown in Figures 2 and 7 stacked together as a cassette system wherein one hollow fiber cassette has a plurality of sanitary fittings, the cassettes being disposed between conventional flat membrane cassette system end plates, wherein a flat membrane cassette external manifold is not used.

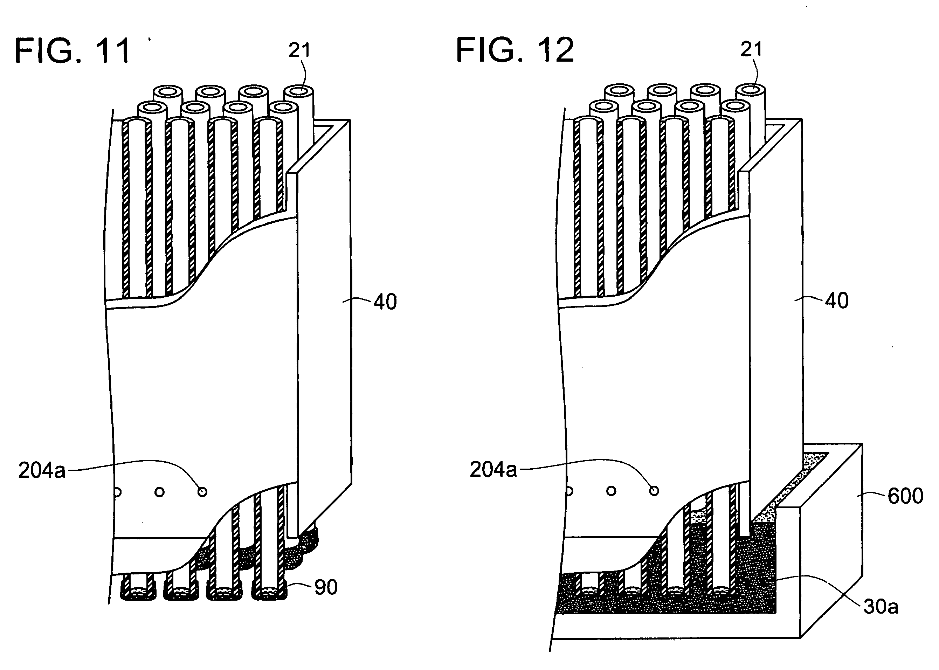

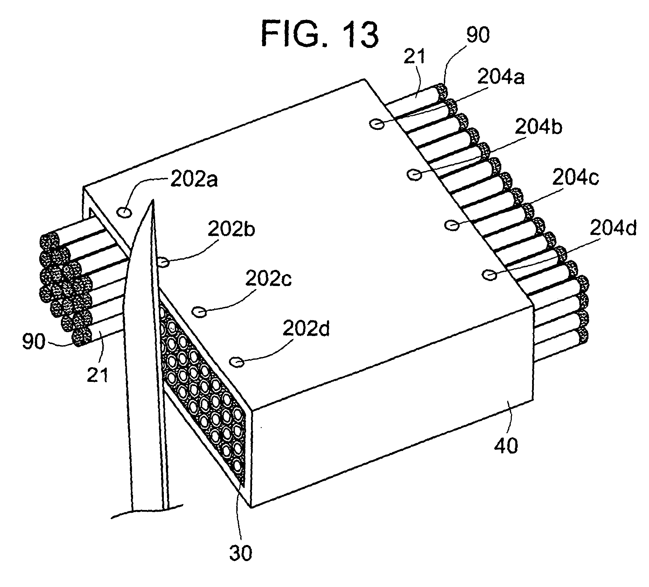

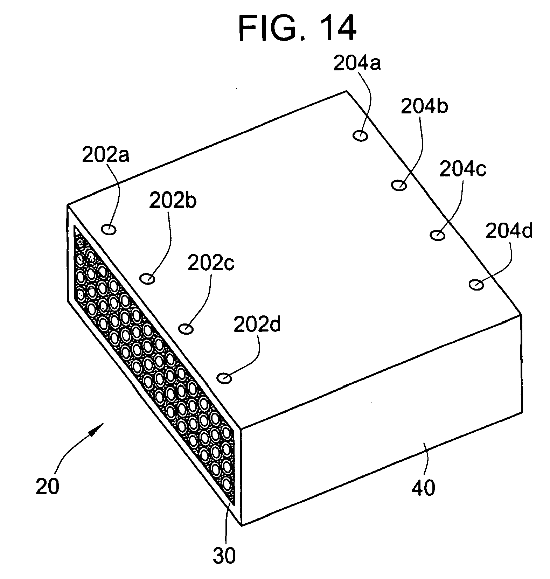

Figures 11-14 show one embodiment of a method for sealing or potting a filter comprising a plurality of hollow fiber membranes in a filter housing. Figure 11 shows a plurality of hollow fiber membranes, each membrane being pre-potted at one end, arranged in a filter housing. Figure 12 shows potting one end of the filter housing, wherein the pre-potted hollow fiber membranes and the filter housing of Figure 11 are disposed in a potting cup containing encapsulant therein. Figure 13 shows a filter housing potted at opposing ends and having pre-potted hollow fiber membranes therein, the ends of the membranes extending from the opposing ends of the filter housing, wherein the membranes are cut to remove the pre-potted ends and provide open-ended membranes. Figure 14 shows the potted filter housing of Figure 13 with the filter therein, also showing the open ends of the hollow fibers.

### DETAILED DESCRIPTION OF THE INVENTION

A hollow fiber cassette according to the present invention comprises a filter housing, the filter housing including a plurality of filter housing permeate ports; a filter disposed in the housing, the filter comprising a plurality of hollow fiber membranes; an internal manifold comprising a first cassette header and a second cassette header, the first and second cassette headers each comprising a plurality of cassette permeate ports, wherein the filter housing permeate ports are in fluid communication with the cassette permeate ports; the first cassette header further comprising at least one cassette feed port; and the second cassette header further comprising at least one cassette retentate port.

In preferred embodiments, the first cassette header includes at least two cassette feed ports, and the second cassette header includes at least two cassette retentate ports.

In accordance with another embodiment, a hollow fiber cassette is provided comprising a filter housing, the filter housing including a plurality of filter housing permeate ports; a filter disposed in the housing, the filter comprising a plurality of hollow fiber membranes; an internal manifold comprising a first cassette header and a second cassette header, the first and second cassette headers each comprising a plurality of cassette permeate ports and a cassette permeate connector, wherein the filter housing permeate ports are in fluid communication with the cassette permeate ports, and the cassette permeate ports are in fluid communication with the cassette permeate connector; the first cassette header further comprising a plurality of cassette feed ports and a cassette feed connector, the cassette feed ports being in fluid communication with the cassette feed connector; and the second cassette header further comprising a plurality of cassette retentate ports and a cassette retentate connector, the cassette retentate ports being in fluid communication with the cassette retentate connector. In a preferred embodiment, the cassette permeate connectors, the cassette feed connector, and the cassette retentate connector, comprise sanitary fittings.

A hollow fiber cassette system according to an embodiment of the invention comprises at least two cassettes. The cassettes can be stacked together or separated, e.g., arranged on opposing sides of a bi-directional external flat membrane cassette manifold. One embodiment of a hollow fiber cassette system comprises (a) at least one first hollow fiber cassette comprising a filter housing, the filter housing including a plurality of filter housing permeate ports; a filter disposed in the housing, the filter comprising a plurality of hollow fiber membranes; an internal manifold comprising a first cassette header and a second cassette header, the first and second cassette headers each comprising a plurality of cassette permeate ports, wherein the filter housing permeate ports are in fluid communication with the cassette permeate ports; the first cassette header further comprising at least one cassette feed port; and the second cassette header further comprising at least one cassette retentate port; and, in fluid communication therewith, (b) an additional hollow fiber cassette comprising a filter housing, the filter housing including a plurality of filter housing permeate ports; a filter disposed in the housing, the filter comprising a plurality of hollow fiber membranes; an internal manifold comprising a first cassette header and a second cassette header, the first and second cassette headers each comprising a plurality of cassette permeate ports and a cassette permeate sanitary fitting, wherein the filter housing permeate ports are in fluid communication with the cassette permeate ports, and the cassette permeate ports are in fluid communication with the cassette permeate sanitary fitting; the first cassette header further comprising a plurality of cassette feed ports and a cassette feed sanitary fitting, wherein the cassette feed ports are in fluid communication with the cassette feed sanitary fitting; and the second cassette header further comprising a plurality of cassette retentate ports and a cassette retentate sanitary fitting, wherein the cassette retentate ports are in fluid communication with the cassette retentate sanitary fitting.

In accordance with embodiments of the invention, methods for processing a fluid, e.g., to provide a permeate, more preferably, a permeate and a retentate are also provided.

A method for separating a fluid into a permeate and a retentate according to an embodiment of the invention comprises passing a feed fluid into a hollow fiber cassette comprising a filter comprising a plurality of hollow fiber membranes, wherein each of the plurality of hollow fiber membranes has an inside surface and an outside surface; and an internal manifold including at least two permeate ports and at least one retentate port, the internal manifold being in fluid communication with the filter; passing a permeate through the inside and outside surfaces of the hollow fiber membranes and through the permeate ports; and passing a retentate through the retentate port.

Typically, the cassette has a generally regular polygon configuration, for example, a generally rectangular configuration. In accordance with embodiments of the invention, the hollow fiber cassettes can be used with or without conventional external manifolds as used for flat sheet membrane cassettes. For example, in one embodiment, the hollow fiber membrane cassette is arranged such that it has similar dimensions to that of a flat sheet filtration cassette, flat sheet packet, or flat sheet plate and frame device, wherein the hollow fiber membrane cassette has a port design and geometry suitable for use as a retrofit of flat sheet filtration cassette or plate and frame installations, particularly those within the biopharmaceutical industry. Accordingly, there is no need to alter existing flat sheet manifolds, end plates, plumbing, or the like. However, in a preferred embodiment of the invention, the cassette is adapted for use without an external manifold, and can be used with existing end plates.

The casing (including the filter housing, and the internal manifold, e.g., the cassette header(s)) can be formed from any suitable polymeric material as is known in the art, e.g., molded and/or machined plastic (including thermoplastic), that is compatible with the fluid being processed. In a preferred embodiment, the casing is a polymer, preferably a transparent or translucent polymer, such as an acrylic, polypropylene, sulfone (including polysulfone, polyethersulfone, polyphenylsulfone, and polyarylsulfone), polystyrene, or a polycarbonated resin. Such a casing is easily and economically fabricated, and allows observation of the passage of fluid through the cassette.

In a preferred embodiment, the casing components or elements are joined to form an integral shell including ports, typically located on at least one side (preferably on opposing sides, in some embodiments, on three or four sides) of the casing. In accordance with the invention, the casing (e.g., the first and second cassette headers) is typically retained between a flat end plate and a flat cassette manifold designed for housing flat sheet membrane cassettes (e.g., as shown in Figure 9), or between a pair of flat end plates (e.g., as shown in Figure 10). If desired, the exterior casing can include one or more holes, grooves and/or cutouts, e.g., allowing the bolts for end plates to fit in the holes, grooves and/or cutouts. Such an arrangement can be useful in reducing the potential that the cassettes will shift during use. Alternatively, or additionally, the casing can be adapted for ease of stacking cassettes, wherein the cassette headers include, for example ribs and/or grooves that allow stacked headers to fit together.

The internal manifold (preferably comprising a first cassette header and a second cassette header) comprises a series of ports, channels and/or internal conduits geometrically placed to optimize flow distribution to and from the filter, and, when used in retrofit applications, preferably has dimensions, porting, and geometry similar to that of the industry standard flat sheet installations, and carries the flow to and from the pre-disposed porting of the existing flat sheet manifold system.

The internal manifold includes at least one feed port and at least one permeate port, and typically also includes at least one retentate port. The internal manifold can have any number of ports. For example, each cassette header typically has 1 to 10 permeate ports, and 1 to 10 feed or retentate ports, and embodiments can have variations combinations of the types of ports, e.g., each cassette header can have 3 permeate ports, and 4 feed or retentate ports. Other embodiments can have fewer ports, or a greater number of ports. Typically, the first and second cassette headers each include at least 2 filtrate ports and at least two feed or retentate ports.

In some embodiments of the invention, the casing, more preferably, the first and/or second cassette headers, includes at least one connector, such as a barbed or threaded connector, a sanitary fitting, or a non-sanitary fitting. In one preferred embodiment,
wherein the first and second cassette headers each comprise a cassette permeate connector, the first cassette header also including a cassette feed connector, the second cassette header also including a cassette retentate connector, each connector, i.e., the cassette permeate connectors, the cassette feed connector, and the cassette retentate connector, comprises a sanitary fitting.

Preferably, the first and second cassette headers each have opposing planar, or generally planar, top and bottom walls (e.g., the walls adapted for contacting the flat end plates). The first and second cassette headers can each have planar, or generally planar, opposing side walls. Typically, the opposing top and bottom walls have a larger planar area than the opposing side walls. If desired, any of the top, bottom, and side walls of the filter housing can be generally coplanar with the walls of the cassette headers.

The filter comprises at least one, and more preferably, two or more hollow fiber membranes. The filter is sealed in the filter housing which is potted at both ends with an encapsulant such as an adhesive (e.g., urethane and/or epoxy), thus sealing the feed and retentate from the permeate.

A variety of hollow fiber membranes, preferably porous hollow fiber membranes, can be utilized in the cassette, and a cassette can include two or more membranes having different characteristics. The hollow fiber membranes can comprise substantially smooth inner and outer surfaces, convoluted inner and/or outer surfaces, spiraled inner and/or outer surfaces, membranes having a spiral shape, or combinations thereof. The hollow fiber membranes, that are polymeric, or non-polymeric, can be skinned or unskinned. Alternatively, or additionally, the hollow fiber membranes can be symmetric or asymmetric.

The hollow fiber membranes can be produced in accordance with a variety of methods, including conventional melt spinning, dry-wet spinning, and wet-wet spinning processes. The membranes can be produced from any suitable metal, ceramic, polymer and/or combinations thereof. Preferably, the membranes are porous hollow fiber polymer membranes.

The membranes in the cassette can have any suitable pore structure, and the cassette can be used in microfiltration, ultrafiltration, and reverse osmosis applications.

In some embodiments of the cassette according to the invention, the filter comprises hollow fiber membranes having pores in the inner surface and inner portion that are larger than the pores at the outer surface and outer portion, providing efficient filtration (retaining and/or capturing larger molecules, species and debris, while allowing the smaller molecules and/or species to pass in the permeate) and advantageously providing increased capacity and resistance to fouling. In preferred embodiments, the membranes efficiently retain the larger molecules or species while allowing the smaller molecules or species of interest to pass through at a high concentration or throughput.

In an embodiment of the invention, the hollow fiber cassette provides a self-contained module, and a plurality of cassettes can be utilized without the use of external hardware manifolds for each cassette.

Embodiments of the invention can provide volume to filter surface area ratios and hold up volumes similar to that of conventional flat sheet cassette systems while providing a foot print similar to those conventional flat sheet systems. Moreover, since a single casing can be used, rather than a plurality of cylindrical housings or modules for hollow fibers (including the associated external conduits and fittings), the invention can have a smaller foot print and less fluid hold up than the plurality of cylindrical hollow fiber modules. Additionally, in many applications, the inventive cassette can allow the operator to reduce the pressure drop within a system, as hollow fiber membrane systems can exhibit lower resistance to flow through the feed channels than conventional flat sheet devices.

Embodiments of the invention are particularly suitable for filtering viscous solutions, solutions with high particulate loadings, and solutions sensitive to high shear. Cassettes according to the invention have a variety of applications, including, for example, gas and/or liquid filtration, for example, water filtration (e.g., particulate and/or microorganism removal from municipal water, or preparation of pure water for microelectronics), filtration of paint, waste water, and particulate, pyrogen, virus and/or microorganism removal from other fluids, including biological fluids such as blood.

In preferred embodiments, the cassettes are useful in filtering fluids for protein concentration and purification, e.g., for biopharmaceutical applications, e.g., to isolate cell expression products from cells and undesirable cellular matter. Other applications include, for example, cell-virus separation, cell-macromolecule separation, virus-macromolecule separation, and macromolecule-macromolecule separation.

While the cassettes are preferably used in tangential flow filtration applications, they can also be used in dead end flow applications. They can be used in single pass and multiple pass applications.

Each of the components of the invention will now be described in more detail below, wherein like components have like reference numbers. In accordance with the invention, the terms "permeate" and "filtrate" (including, for example, "permeate port" and "filtrate port") are used interchangeably.

Figures 1 and 2 show, respectively, exploded and assembled top views of a hollow fiber cassette or module 1000 according to an embodiment of the invention, comprising an external casing 400 comprising a filter housing 40, the filter housing having arranged therein a filter 20 comprising a plurality of hollow fiber membranes 21. The casing 400 also comprises an internal manifold 50 comprising first and second cassette headers 51, 52 communicating with the ends of the filter housing 40. An encapsulant (potting material) provides a seal 30 between the outside surfaces of the ends of the membranes and the inside of the filter housing 40.

In accordance with the embodiment shown in Figures 1 and 2, the filter housing 40 comprises a plurality of housing filtrate ports 202a-202e, 204a-204e (on one side of the housing), and 203a-203e, 205a-205e (on the opposing side of the housing), the first cassette header 51 comprises a plurality of feed ports 100a-100e and filtrate ports 200a-200d, and the second cassette header 52 comprises a plurality of retentate ports 102a-102e, and filtrate ports 206a-206d. While not shown in Figures 1 and 2, since a preferred embodiment of the cassette also has ports on the bottom side, the first header also comprises (as partially shown in Figures 3 and 4) a plurality of feed ports 101a-101e, and filtrate ports 201a-201e, and the second header comprises a plurality of retentate ports 103a-103e, and filtrate ports 207a-207d.

In those embodiments wherein the hollow fiber cassette is used in a flat sheet cassette retrofit system (e.g., comprising an external flat cassette manifold and end plate), the cassette 1000 is arranged to receive feed flow from an external flat cassette manifold and subsequently direct retentate and permeate flow to the external manifold (e.g., as shown in Figure 9, showing external cassette manifold 500 with feed port 502 and retentate port 504, wherein the cassette 1000 is arranged between external manifold 500 and end plate 501; external manifold bolts and external manifold filtrate ports not shown). Thus, using Figures 9, 1, and 2 for reference, the cassette 1000 is arranged to receive feed flow from the external manifold 500 and provide feed flow through feed ports 100a-100e, retentate flow through ports 102a-102e, and filtrate flow through filtrate ports 200a-200d, and 206a-206e. As noted above, since an embodiment of the cassette also has ports on the bottom side, it is also arranged to provide feed flow through feed ports 101a-101e, retentate flow through ports 103a-103e, and filtrate flow through filtrate ports 201a-201e, and 207a-207d.

In the embodiment illustrated in Figures 1 (exploded view) and 2 (assembled view), the cassette 1000 is arranged for "inside-out" flow, i.e., wherein feed is directed into the bores of the hollow fiber membranes 21 of filter 20, filtrate passes from the inside surfaces of the membranes to the outside surfaces, and retentate passes tangentially to the inside surfaces and along the bores of the membranes. Figures 3 and 4 show cross-sectional views of the assembled cassette showing the feed, retentate, and permeate flow paths in more detail.

Accordingly, using Figures 1 and 3 for reference, wherein Figure 3 also shows an external flat cassette end plate 501 compressed against one side (e.g., the planar top walls) of the first and second cassette headers 51 and 52, feed is directed from the external manifold (not shown) through feed ports 101a-101e, feed chamber 160, and into the inner bores of the hollow fiber membranes 21. Filtrate passes from the inside surfaces of the membranes through the outside surfaces, through housing filtrate ports 203a-203e, and first cassette header filtrate ports 201a-201e, and through housing filtrate ports 205a-205e and second cassette header filtrate ports 207a-207d. Filtrate is subsequently passed through the filtrate ports of the external manifold (not shown).

In those embodiments wherein a flat end plate is not compressed against the cassette headers, e.g., wherein a plurality of cassettes are stacked together and feed is initially passed into the lower cassette, feed also passes through feed ports 100a-100e into the upper cassette(s), and filtrate from the upper cassette(s) passes into the lower cassette. If desired, each of the cassettes can include at least one additional filtrate port arranged to allow the flow of filtrate from the upper cassette(s) to the lower cassette(s).

Retentate, i.e., the fluid not passing through the inner and outer surfaces of the membranes, passes tangentially to the inner surfaces of the membranes, and through the retentate ports. Accordingly, using Figures 1 and 4 for reference (wherein Figure 4 also shows the external flat cassette end plate 501 compressed against one side of the first and second cassette headers 51, 52), retentate passes tangentially to the inner surfaces of the membranes, along the hollow bores, into the retentate chamber 180, and through the retentate ports 103a-103e. The retentate can subsequently be passed through the retentate port(s) of the flat cassette manifold (e.g., retentate port 504 shown in Figure 9). In those embodiments wherein a flat end plate is not compressed against the cassette headers, e.g., wherein a plurality of cassettes are stacked together and feed passes from the lower cassette into the upper cassette(s), retentate also passes from the upper cassette(s), through retentate ports 102a-102e, into the retentate chamber and through retentate ports 103a-103e.

In those embodiments wherein a plurality of hollow fiber cassettes are stacked together, fluid can be passed through any number of cassettes.

In some embodiments, at least one cassette header, typically both cassette headers, include offset ports, e.g., to provide desirable flow and flow separation for the feed, permeate and retentate. Figure 5 shows a more detailed view of the embodiment of the cassette header, e.g., second cassette header 52, shown in Figure 1 (preferably, the first and second headers are arranged similarly, or identically), wherein each cassette filtrate port (206a-206e, 207a-207e) comprises an outside filtrate port (220a-220e and 221a-221e, respectively), an inside filtrate port (222a-222e and 223a-223e, respectively), and a filtrate intermediate conduit or channel (224a-224e and 225a-225e, respectively) providing fluid communication between the outside port and the inside port. For example, cassette filtrate port 206a comprises outside filtrate port 220a, inside filtrate port 222a, and filtrate intermediate conduit 224a interposed between the outside and inside filtrate ports. On the opposite side of the second cassette header, cassette filtrate port 207a comprises outside filtrate port 221a, inside filtrate port, and filtrate intermediate conduit interposed between the outside and inside filtrate ports.

Since the first and second cassette headers are preferably arranged similarly, using the embodiments illustrated in Figures 1 and 5 for reference, an embodiment of the first cassette header 51 comprises cassette filtrate ports (200a-200e, 201 a-201 e) comprising outside filtrate ports inside filtrate ports and filtrate intermediate conduits or channels providing fluid communication between the outside port and the inside port. For example, cassette filtrate port 200a comprises outside filtrate port, inside filtrate port, and filtrate intermediate conduit interposed between the outside and inside filtrate ports. On the other side of the first cassette header, cassette filtrate port 201a comprises outside filtrate port, inside filtrate port, and filtrate intermediate conduit interposed between the outside and inside filtrate ports.

Such an offset port arrangement for the first and second cassette headers improves the space for flow between the feed and retentate ports of the cassette header and the internal bores of the membranes in the housing without interfering with the flow between the filtrate ports of the housing and the filtrate ports of the internal manifold. Once the filter housing is potted and the cassette assembled, the cassette is arranged such that the filtrate is isolated from the feed and retentate.

Figures 6-8 show another embodiment of a hollow fiber cassette or module 1000 according to the invention, also comprising an external casing 400 comprising a filter housing 40, having arranged therein a filter 20 comprising a plurality of hollow fiber membranes 21 (the filter being sealed in the housing as described above), wherein the casing 400 also comprises an internal manifold 50 comprising first and second cassette headers 51, 52 communicating with the ends of the filter housing 40. However, the embodiment of the cassette illustrated in Figures 6-8 also includes a plurality of sanitary fittings as shown in more detail in Figure 7, i.e., first cassette header 51 also comprises a feed sanitary port 150 and a filtrate sanitary port 250, and second cassette header 52 also comprises a retentate sanitary port 152 and a filtrate sanitary port 252. The sanitary fittings allow direct connections (without external manifolds) for feed, retentate, and permeate flow.

Figure 8 shows a more detailed view of the embodiment of a cassette header, e.g., second cassette header 52, shown in Figure 7. Similar to the embodiment of the second cassette header 52 shown in Figure 5, second cassette header 52 shown in Figure 8 comprises offset ports, wherein each filtrate port (206a-206e, 207a-207e) comprises an outside filtrate port (220a-220e and 221a-221e, respectively), an inside filtrate port (222a-222e and 223a-223e, respectively), and a filtrate intermediate conduit or channel (224a-224e and 225a-225e, respectively) providing fluid communication between the exterior port and the interior port. Thus, cassette filtrate port 206a comprises outside filtrate port 220a, inside filtrate port 222a, and filtrate intermediate conduit 224a interposed between the outside and inside filtrate ports. On the opposing side of the cassette header, cassette filtrate port 207a comprises outside filtrate port 221a, inside filtrate port 223a, and filtrate intermediate conduit 225a interposed between the outside and inside filtrate ports. However, in accordance with the embodiment shown in Figure 8, the second cassette header 52 also comprises retentate sanitary port 152, a filtrate sanitary port 252, and additional filtrate conduits 251a-251e and 253a-253e. The additional filtrate conduits provide fluid communication between filtrate conduits 224a-224e, 225a-225e, and the filtrate sanitary port 252, and retentate sanitary port 152 is in fluid communication with retentate chamber 180. The first cassette header can have a similar arrangement of ports and conduits, wherein the feed sanitary port 150 is in fluid communication with feed chamber 160.

Illustratively, since the first and second cassette headers are preferably arranged similarly, using the embodiments illustrated in Figures 7 and 8 for reference, an embodiment of the first cassette header 51 comprises cassette filtrate ports (200a-200e, 201a-201e) comprising outside filtrate ports (212a-212e and 211a-211e, respectively), inside filtrate ports (214a-214e and 213a-213e, respectively), and filtrate intermediate conduits or channels (216a-216e and 215a-215e, respectively) providing fluid communication between the outside port and the inside port. The first cassette header 51 also comprises feed sanitary port 150 in fluid communication with feed chamber 160, as well as a filtrate sanitary port 250, and additional filtrate conduits. The additional filtrate conduits provide fluid communication between filtrate intermediate conduits 214a-214e, 213a-213e, and the filtrate sanitary port 250, and feed sanitary port 150 is in fluid communication with feed chamber 160.

As with the embodiment illustrated in Figures 1, 2, and 5, the embodiment shown in Figures 6-8 can be utilized as a retrofit in flat sheet cassette applications, and can be used with conventional flat cassette systems. However, the embodiment shown in Figures 6 and 7 is especially advantageous in that it can be utilized with conventional flat end plates, without requiring the use of external flat plate manifolds. For example, as shown in Figure 10, since an embodiment of the inventive cassette includes a plurality of sanitary fittings, it can be placed between conventional flat end plates (flat plates 501 and 511), and feed, retentate, and filtrate lines can be connected without using an external manifold. Since typical external manifolds are stainless steel, with drilled ports designed for particular applications, the manifolds can be bulky, heavy, expensive, and unsuitable for a variety of applications. In accordance with this embodiment of the invention, the flat plates are merely used to hold the cassettes in place, and the same plates can be used to retain a variety of hollow fiber cassette configurations.

In accordance with the embodiments illustrated in Figures 6-8 and 10, feed is passed through feed sanitary port 150, feed chamber 160, and into the inner bores of the hollow fiber membranes 21. Filtrate passes from the inside surfaces of the membranes through the outside surfaces, through housing filtrate ports 202a-202e, and first cassette header filtrate ports 200a-200e, and through housing filtrate ports 204a-204e and second cassette header filtrate ports 206a-206d. Filtrate passes through the associated permeate intermediate channels and additional filtrate conduits and through the permeate sanitary ports 250 and 252. Feed also passes through feed ports 100a-100e into the upper cassettes, and filtrate from the upper cassettes passes into the lower cassette after passing from the inside surfaces of the membranes through the outside surfaces. If desired, each of the cassettes can include at least one additional filtrate port arranged to allow the flow of filtrate from the upper cassette(s) to the lower cassette(s).

Retentate passes tangentially to the inner surfaces of the membranes, along the hollow bores, into the retentate chamber 180, and through the retentate sanitary fitting 152. Since feed passes from the lower cassette to the upper cassette(s), retentate passing from the upper cassette(s) passes into the lower cassette through the retentate ports 102a-102e and through the retentate sanitary fitting 152.

In accordance with the invention, any embodiments of the hollow fiber cassette can be used individually, or stacked together. In one illustrative arrangement, as shown in Figure 10, one or more cassettes as shown in Figure 2 can be stacked on one of the cassettes as shown in Figure 7. In yet another embodiment, as shown in Figure 9, two or more cassettes as shown in Figure 1 are stacked together.

Figures 11-14 show an exemplary embodiment of a method for preparing the cassette, particularly for arranging the filter in the filter housing. For example, an empty filter housing 40 is obtained, and a plurality of hollow fiber membranes 21 is disposed therein, preferably such that both ends of each of the fiber membranes extend beyond the end of the housing 40. If desired, the ends of the membranes can be sealed, e.g., filled with an encapsulant (sometimes referred to as "pre-potting," which typically comprises placing the end of the membrane in a potting material, removing the end from the material, and letting the potting material harden) before disposing the membranes in the casing. Alternatively, the membranes can be pre-potted after disposing the membranes in the filter housing. Figure 12 shows a plurality of hollow fiber membranes (each membrane having one end 90 pre-potted) arranged in the housing. The encapsulant in the ends of the membranes should not extend to the end of the housing 40, since, as is shown in Figure 13, after the housing has been removed from the potting material and the material has hardened, the membranes (e.g., the potted ends 90) will be trimmed flush with the ends of the housing 40 such that the ends of the membranes are open.

After pre-potting, the housing is potted such that the housing ends are sealed, i.e., the area between the membranes and the area between the inside surface of the housing and the outside surface of the membranes is sealed. For example, each end of the housing, having a plurality of pre-potted membranes extending from the end, can be placed in an encapsulant. Figure 12 shows one end of the housing placed in a potting cup 600 having encapsulant 30a (potting adhesive) therein. In this illustrated embodiment, the housing is arranged in the potting cup such that the filtrate ports of the housing are above the level of the encapsulant, thus preventing the filtrate ports from being sealed with encapsulant while allowing the end of the housing to be sealed. If desired, the outer surfaces of the ends of the housing can be covered with a removable material such as teflon tape, e.g., to subsequently allow excess hardened encapsulant to be neatly removed.

The other end of the filter housing can be potted in a similar manner. As shown in Figure 13, after the ends of the housing have been removed from the potting cup and the potting material has hardened, the ends of the hollow fiber membranes are then trimmed flush with the ends of the housing, providing (as shown in Figure 14) potted housing ends without blocking the internal bores of the membranes.

Subsequently, the internal manifold 50, comprising first and second cassette headers 51 and 52, is mated with the ends of the filter housing, such that the filtrate ports in the headers communicate with the respective filtrate ports in the housing, and the feed and retentate ports in the headers communicate with the respective internal bores of the membranes. Typically, the cassette headers and the filter housing are configured so that there is a tight fit between the outer surfaces of the filter housing, and the inner surfaces of the cassette headers.

Preferably, the filter housing 40 is sealed to the internal manifold 50, more preferably using an adhesive. Once the hollow fiber cassette is assembled, it can be utilized in filtration applications, e.g., wherein the cassette headers are mated with external manifolds and/or end plates or holders, e.g., end plates designed for housing flat sheet membrane cassettes. Since the cassette preferably has a configuration (e.g., dimensions and porting) similar to that of the industry standard flat sheet installations (e.g., flat sheet cassettes or plate and frame devices), embodiments of the invention can be utilized with conventional systems without additional parts, adapters, and/or modifications.

The cassette can have any suitable configuration, e.g., any number of feed, retentate and filtrate ports, any number of fibers (wherein the fibers have similar or different characteristics such as pore structure, asymmetry, symmetry, wall thickness, tensile strength, inner diameter, outer diameter). While Figures 5 and 8 shows embodiments of a cassette header having offset inside and outside cassette filtrate ports each connected via a substantially horizontal permeate intermediate conduit, other embodiments lack offset port and/or conduits. Alternatively, or additionally, the filtrate ports can be connected via other conduit configurations, e.g., diagonal conduits, curved conduits, and combinations thereof.

## Claims

1. A hollow fiber cassette comprising (1000):
a filter housing (40), the filter housing (40) including a plurality of filter housing permeate ports (202a-202e, 03a-203e, 204a-204e, 205a-205e);
a filter (20) disposed in the housing (40), the filter (20) comprising a plurality of hollow fiber membranes (21);
an internal manifold (50) comprising a first cassette header (51) and a second cassette header (52),
the first cassette header (51) further comprising at least one cassette feed port (100a-100e, 101a-101e); and
the second cassette header (52) further comprising at least one cassette retentate port 102a-102e, 103a-103e);
**characterised in that** the first and second cassette headers (51 and 52) each comprise a plurality of cassette permeate ports (200a-200d, 206a-206d, 207a-207d), wherein the filter housing permeate ports (202a-202e, 03a-203e, 204a-204e, 205a-205e) are in fluid communication with the cassette permeate ports (200a-200d, 206a-206d, 207a-207d).

2. A hollow fiber cassette (1000) according to claim 1 wherein:
said first and second cassette headers (51 and 52) each have a cassette permeate connector, wherein the cassette permeate ports (200a-200d, 206a-206d, 207a-207d) are in fluid communication with the cassette permeate connectors;
the first cassette header (51) further comprising a plurality of cassette feed ports and a cassette feed connector, wherein the cassette feed ports (100a-100e, 101a-101e) are in fluid communication with the cassette feed connector; and
the second cassette header (52) further comprising a plurality of cassette retentate ports and a cassette retentate connector,
wherein the cassette retentate ports (102a-102e, 103a-103e) are in fluid communication with the cassette retentate connector.

3. A hollow fiber cassette system comprising;
a hollow fiber cassette (1000) in accordance with claim 1 and a hollow fiber cassette (1000) in accordance with claim 2, wherein said hollow fiber cassette (1000) in accordance with claim 1 is in fluid communication with said hollow fiber cassette (1000) in accordance with claim 2 such that the cassette feed ports (100a-100e, 101a-101e) of the cassettes are in mutual fluid communication, the cassette permeate ports (200a-200d, 205a-206d, 207a-207d) of the cassettes are in mutual fluid communication and the retentate ports 102a-102e, 103a-103e) of the cassettes are in mutual fluid communication.

4. A hollow fiber cassette system comprising:
at least one first hollow fiber cassette (1000) in accordance with claim 1, and in fluid communication therewith,
an additional hollow fiber cassette (1000) comprising a filter housing (40), the filter housing (40) including a plurality of filter housing permeate ports (202a-202e, 03a-203e, 204a-204e, 205a-205e);;
a filter (20) disposed in the housing, the filter (20) comprising a plurality of hollow fiber membranes (21);
an internal manifold (50) comprising a first cassette header (51) and a second cassette header (52), the first and second cassette headers (51 and 52) each comprising a plurality of cassette permeate ports (200a-200d, 206a-206d, 207a-207d); and a cassette permeate sanitary fitting (250), wherein the filter housing permeate ports (202a-202e, 03a-203e, 204a-204e, 205a-205e) are in fluid communication with the cassette permeate ports (200a-200d, 206a-206d, 207a-207d); and the cassette permeate ports (200a-200d, 206a-206d, 207a-207d); are in fluid communication with the cassette permeate sanitary fitting (250); the first cassette header (51) further comprising a plurality of cassette feed ports (100a-100e, 101a-101e) and a cassette feed sanitary fitting (150), wherein the cassette feed ports ports (100a-100e, 101a-101e) are in fluid communication with the cassette feed sanitary fitting (150) ; and the second cassette header (52) further comprising a plurality of cassette retentate ports (102a-102e, 103a-103e) and a cassette retentate sanitary fitting (152),
wherein the cassette retentate ports (102a-102e, 103a-103e) are in fluid communication with the cassette retentate sanitary fitting (152).

5. A cassette (1000) in accordance with any of claims 1 or 2, wherein the first and/or second cassette header permeate ports (51 and/or 52) comprise offset inside and outside permeate ports (222a-222e, 223a-223e and 220a-220e, 221a-221e), and/or wherein the first and/or second cassette headers (51 and/or 52) comprise at least one sanitary fitting..

6. A cassette (1000) in accordance with claim 5, wherein the first and second cassette headers (51 and 52) each comprise a permeate sanitary fitting (250, 252).

7. A cassette (1000) in accordance with claim 6, wherein the first cassette header (51) further comprises a feed sanitary fitting (150), and the second cassette header (52) further comprises a retentate sanitary fitting (152).

8. A cassette (1000) in accordance with any of claims 1, 2, 5, 6 or 7, adapted for use with a flat membrane cassette manifold system and/or two flat end plates (501, 511).

9. The cassette (1000) in accordance with any of claims 1, 2, 5-8, wherein the first and second cassette headers (51 and 52) each comprise opposing planar top and bottom walls.

10. A method of processing a fluid comprising:
passing the fluid through the cassette (1000) in accordance with any of claims 1, 2, 5-9; and
obtaining a permeate passing through the filter (20).

11. A method for separating a fluid into a permeate and a retentate comprising:
passing a feed fluid into a hollow fiber cassette (1000) in accordance with any of claims 1, 2, 5-9.

## Patentansprüche

1. Hohlfaserkassette, umfassend (1000):
ein Filtergehäuse (40), wobei das Filtergehäuse (40) eine Mehrzahl von Filtergehäusepermeatanschlüssen (202a-202e, 203a-203e, 204a-204e, 205a-205e) umfasst;
ein Filter (20), das in dem Gehäuse (40) angeordnet ist, wobei das Filter (20) eine Mehrzahl von Hohlfasermembranen (21) umfasst;
einen inneren Verteiler (50), der ein erstes Kassettenkopfstück (51) und ein zweites Kassettenkopfstück (52) umfasst;
wobei das erste Kassettenkopfstück (51) weiter mindestens einen Kassettenzufuhranschluss (100a-100e, 101a-101e) umfasst;
das zweite Kassettenkopfstück (52) weiter mindestens einen Kassettenretentatanschluss (102a-102e, 103a-103e) umfasst;
**dadurch gekennzeichnet, dass** das erste und das zweite Kassettenkopfstück (51 und 52) jeweils eine Mehrzahl von Kassettenpermeatanschlüssen (200a-200d, 206a-206d, 207a-207d) umfasst, wobei die Filtergehäusepermeatanschlüsse (202a-202e, 203a-203e, 204a-204e, 205a-205e) in Fluid-Verbindung mit den Kassettenpermeatanschlüssen (200a-200d, 206a-206d, 207a-207d) stehen.

2. Hohlfaserkassette (1000) nach Anspruch 1, wobei:
das erste und das zweite Kassettenkopfstück (51 und 52) jeweils ein Kassettenpermeatverbindungsstück aufweisen, wobei die Kassettenpermeatanschlüsse (200a-200d, 206a-206d, 207a-207d) in Fluid-Verbindung mit den Kassettenpermeatverbindungsstücken stehen;
das erste Kassettenkopfstück (51) weiter umfasst eine Mehrzahl von Kassettenzufuhranschlüssen und ein Kassettenzufuhrverbindungsstück,
wobei die Kassettenzufuhranschlüsse (100a-100e, 101a-101e) in Fluid-Verbindung mit dem Kassettenzufuhrverbindungsstück stehen; und
das zweite Kassettenkopfstück (52) weiter umfasst eine Mehrzahl von Kassettenretentatanschlüssen und ein Kassettenretentatverbindungsstück,
wobei die Kassettenretentatanschlüsse (102a-102e, 103a-103e) in Fluid-Verbindung mit dem Kassettenretentatverbindungsstück stehen.

3. Hohlfaserkassettensystem, umfassend:
eine Hohlfaserkassette (1000) nach Anspruch 1 und eine Hohlfaserkassette (1000) nach Anspruch 2, wobei die Hohlfaserkassette (1000) nach Anspruch 1 in Fluid-Verbindung mit der Hohlfaserkassette (1000) nach Anspruch 2 derart steht, dass die Kassettenzufuhranschlüsse (100a-100e, 101a-101e) der Kassetten in wechselseitiger Fluid-Verbindung stehen, die Kassettenpermeatanschlüsse (200a-200d, 205a-206d, 207a-207d) der Kassetten in wechselseitiger Fluid-Verbindung stehen, und die Retentatanschlüsse (102a-102e, 103a-103e) der Kassetten in wechselseitiger Fluid-Verbindung stehen.

4. Hohlfaserkassettensystem, umfassend:
mindestens eine erste Hohlfaserkassette (1000) nach Anspruch 1 und, in Fluid-Verbindung damit,
eine zusätzliche Hohlfaserkassette (1000), umfassend ein Filtergehäuse (40), wobei das Filtergehäuse (40) eine Mehrzahl von Filtergehäusepermeatanschlüssen (202a-202e, 203a-203e, 204a-204e, 205a-205e) enthält;
ein Filter (20), das in dem Gehäuse angeordnet ist, wobei das Filter (20) eine Mehrzahl von Hohlfasernmembranen (21) umfasst;
einen internen Verteiler (50), umfassend ein erstes Kassettenkopfstück (51) und ein zweites Kassettenkopfstück (52), wobei das erste und zweite Kassettenkopfstück (51 und 52) jeweils eine Mehrzahl von Kassettenpermeatanschlüssen (200a-200d, 206a-206d, 207a-207d) umfasst; und ein Kassettenpermeat-Hygieneanschlussstück (250), wobei die Filtergehäusepermeatanschlüsse (202a-202e, 203a-203e, 204a-204e, 205a-205e) in Fluid-Verbindung mit den Kassettenpermeatanschlüssen (200a-200d, 206a-206d, 207a-207d) stehen; und die Kassettenpermeatanschlüsse (200a-200d, 206a-206d, 207a-207d) in Fluid-Verbindung mit dem Kassettenpermeat-Hygieneanschlussstück (250) stehen; das erste Kassettenkopfstück (51) weiter eine Mehrzahl von Kassettenzufuhranschlüssen (100a-100e, 101a-101e) und ein Kassettenzufuhr-Hygieneanschlussstück (150) umfasst, wobei die Kassettenzufuhranschlüssen (100a-100e, 101a-101e) in Fluid-Verbindung mit den Kassettenzufuhr-Hygieneanschlussstück (150) steht; und das zweite Kassettenkopfstück (52) weiter eine Mehrzahl von Kassettenretentatanschlüssen (102a-102e, 103a-103e) und ein Kassettenretentat-Hygieneanschlussstück (152) umfasst, wobei die Kassettenretentatanschlüsse (102a-102e, 103a-103e) in Fluid-Verbindung mit dem Kassettenretentat-Hygieneanschlussstück (152) stehen.

5. Kassette (1000) nach einem der Ansprüche 1 oder 2, wobei der erste und/oder zweite Kassettenkopfpermeatanschluss (51 und/oder 52) versetzte Innen- und Außenpermeatanschlüsse (222a-222e, 223a-223e, 220a-220e, 221a-221e) umfasst, und/oder wobei das erste und/oder zweite Kassettenkopfstück (51 und/oder 52) mindestens ein Hygieneanschlussstück umfasst.

6. Kassette (1000) nach Anspruch 5, wobei das erste und das zweite Kassettenkopfstück (51 und 52) jeweils ein Permeat-Hygieneanschlussstück (250, 252) umfassen.

7. Kassette (1000) nach Anspruch 6, wobei das erste Kassettenkopfstück (51) weiter ein Zufuhr-Hygieneanschlussstück (150) umfasst, und das zweite Kassettenkopfstück (52) weiter ein Retentat-Hygieneanschlussstück (152) umfasst.

8. Kassette (1000) nach einem der Ansprüche 1, 2, 5, 6 oder 7, angepasst zur Verwendung mit einem flachen Membrankassettenverteilersystem und/oder zwei flachen Endplatten (501, 511).

9. Kassette (1000) nach einem der Ansprüche 1, 2, 5 bis 8, wobei das erste und zweite Kassettenkopfstück (51 und 52) jeweils entgegengesetzte, planare obere oder untere Wände umfasst.

10. Verfahren zum Verarbeiten eines Fluids, umfassend:
Laufenlassen eines Fluids durch die Kassette (1000) nach einem der Ansprüche 1, 2, 5 bis 9; und
Erhalten eines Permeats, das durch das Filter (20) läuft.

11. Verfahren zum Trennen eines Fluids in ein Permeat und ein Retentat, umfassend Laufenlassen eines Zufuhr-Fluids in eine Hohlfaserkassette (1000) nach einem der Ansprüche 1, 2, 5 bis 9.

## Revendications

1. Cassette à fibre creuse (1000) comprenant :
un boîtier de filtre (40), le boîtier de filtre (40) comportant une pluralité d'orifices pénétrants de boîtier de filtre (202a à 202e, 203a à 203e, 204a à 204e, 205a à 205e) ;
un filtre (20) disposé dans le boîtier (40), le filtre (20) comprenant une pluralité de membranes à fibre creuse (21) ;
un distributeur interne (50) comprenant un premier collecteur de cassette (51) et un second collecteur de cassette (52) ;
le premier collecteur de cassette (51) comprenant, en outre, au moins un orifice d'alimentation de cassette (100a à 100e, 101a à 101e) ; et
le second collecteur de cassette (52) comprenant, en outre, au moins un orifice de rétention de cassette (102a à 102e, 103a à 103e) ;
**caractérisée en ce que** les premier et second collecteurs de cassette (51 et 52) comprennent chacun une pluralité d'orifices pénétrants de cassette (200a à 200d, 206a à 206d, 207a à 207d), dans laquelle les orifices pénétrants de boîtier de filtre (202a à 202e, 203a à 203e, 204a à 204e, 205a à 205e) sont en communication fluidique avec les orifices pénétrants de cassette (200a à 200d, 206a à 206d, 207a à 207d).

2. Cassette à fibre creuse (1000) selon la revendication 1, dans laquelle :
lesdits premier et second collecteurs de cassette (51 et 52) comportent chacun un raccord pénétrant de cassette, dans laquelle les orifices pénétrants de cassette (200a à 200d, 206a à 206d, 207a à 207d) sont en communication fluidique avec les raccords pénétrants de cassette ;
le premier collecteur de cassette (51) comprenant, en outre, une pluralité d'orifices d'alimentation de cassette et un raccord d'alimentation de cassette, dans laquelle les orifices d'alimentation de cassette (100a à 100e, 101a à 101e) sont en communication fluidique avec le raccord d'alimentation de cassette, et
le second collecteur de cassette (52) comprenant, en outre, une pluralité d'orifices de rétention de cassette et un raccord de rétention de cassette, dans laquelle les orifices de rétention de cassette (102a à 102e, 103a à 103e) sont en communication fluidique avec le raccord de rétention de cassette.

3. Dispositif formant cassette à fibre creuse comprenant :
une cassette à fibre creuse (1000) selon la revendication 1 et une cassette à fibre creuse (1000) selon la revendication 2, dans lequel ladite cassette à fibre creuse (1000) selon la revendication 1, est en communication fluidique avec ladite cassette à fibre creuse (1000) selon la revendication 2, de telle sorte que les orifices d'alimentation de cassette (100a à 100e, 101a à 101e) des cassettes sont en communication fluidique mutuelle, les orifices pénétrants de cassette (200a à 200d, 206a à 206d, 207a à 207d) des cassettes sont en communication fluidique mutuelle et les orifices de rétention de cassette (102a à 102e, 103a à 103e) des cassettes sont en communication mutuelle.

4. Dispositif formant cassette à fibre creuse comprenant :
au moins une première cassette à fibre creuse (1000) selon la revendication 1, et, en communication fluidique avec celle à ci,
une cassette à fibre creuse supplémentaire (1000) comprenant un boîtier de filtre (40), le boîtier de filtre (40) comportant une pluralité d'orifices pénétrants de boîtier de filtre (202a à 202e, 203a à 203e, 204a à 204e, 205a à 205e) ;
un filtre (20) disposé sur le boîtier, le filtre (20) comprenant une pluralité de membranes à fibre creuse (21) ;
un distributeur interne (50) comprenant un premier collecteur de cassette (51) et un second collecteur de cassette (52), les premier et second collecteurs de cassette (51 et 52) comprenant chacun une pluralité d'orifices pénétrants de cassette (200a à 200d, 206a à 206d, 207a à 207d) ; et un raccord sanitaire pénétrants de cassette (250), dans lequel les orifices pénétrants de boîtier de filtre (202a à 202e, 203a à 203e, 204a à 204e, 205a à 205e) sont en communication fluidique avec les orifices pénétrants de cassette (200a à 200d, 206a à 206d, 207a à 207d) ; et les orifices pénétrants de cassette (200a à 200d, 206a à 206d, 207a à 207d) sont en communication fluidique avec le raccord sanitaire pénétrant de cassette (250) ; le premier collecteur de cassette (51) comprenant, en outre, une pluralité d'orifices d'alimentation de cassette (100a à 100e, 101a à 101e) et un raccord sanitaire d'alimentation de cassette (150), dans lequel les orifices d'alimentation de cassette (100a à 100e, 101a à 101e) sont en communication fluidique avec le raccord sanitaire d'alimentation de cassette (150) ; et le second collecteur de cassette (52) comprenant, en outre, une pluralité d'orifices de rétention de cassette (102a à 102e, 103a à 103e) et un raccord sanitaire de rétention de cassette (152), dans lequel les orifices de rétention de cassette (102a à 102e, 103a à 103e) sont en communication fluidique avec le raccord sanitaire de rétention de cassette (152).

5. Cassette (1000) selon l'une quelconque des revendications 1 ou 2, dans laquelle les orifices pénétrants de premier et/ou second collecteurs de cassette (51 et/ou 52) comprennent des orifices pénétrants internes et externes décalés (222a à 222e, 223a à 223e et 220a à 220e, 221a à 221e) et/ou dans lequel les premier et/ou second collecteurs de cassette (51 et/ou 52) comprennent au moins un raccord sanitaire.

6. Cassette (1000) selon la revendication 5, dans laquelle les premier et second collecteurs de cassette (51 et 52) comprennent chacun un raccord sanitaire pénétrant (250, 252).

7. Cassette (1000) selon la revendication 6, dans laquelle le premier collecteur de cassette (51) comprend, en outre, un raccord sanitaire d'alimentation (150) et le second collecteur de cassette (52) comprend, en outre, un raccord sanitaire de rétention (152).

8. Cassette (1000) selon l'une quelconque des revendications 1, 2, 5, 6 ou 7, adaptée à une utilisation avec un dispositif formant distributeur de cassette à membrane plate et/ou deux plaques d'extrémité plates (501 et 511).

9. Cassette (1000) selon l'une quelconque des revendications 1, 2, 5 à 8, dans laquelle les premier et second collecteurs de cassette (51 et 52) comprennent chacune des parois supérieure et inférieure planes opposées.

10. Procédé de traitement d'un fluide, comprenant :
le passage du fluide à travers la cassette (1000) selon l'une quelconque des revendications 1, 2, 5 à 9 ; et
l'obtention d'un passage pénétrant à travers le filtre (20).

11. Procédé de séparation d'un fluide en un passage pénétrant et un passage de rétention comprenant :
le passage d'un fluide d'entrée dans une cassette à fibre creuse (1000) selon l'une quelconque des revendications 1, 2, 5 à 9.
